# EUROPÄISCHE PATENTANMELDUNG

(11) **EP 0 703 330 A2**
(43) Veröffentlichungstag der Anmeldung: **27.03.1996**
(21) Anmeldenummer: 95113227.3
(22) Anmeldetag: 23.08.1995
(51) Int. Cl.: E04F 13/08

(54) **Im Bauwesen zu verwendendes Dämmformteil sowie Verfahren zu seiner Herstellung**

(30) Priorität: 23.09.1994 DE 4434012
(71) Anmelder: Heinemann, Herbert, D-75181 Pforzheim (DE)
(72) Erfinder: Heinemann, Herbert, D-75181 Pforzheim (DE)
(74) Vertreter: Reimold, Otto, Dipl.-Phys.Dr.

(57) **Zusammenfassung**

Ein im Bauwesen zu verwendendes Dämmformteil in Gestalt einer Platte, einer Kassette, eines Paneels od.dgl. weist einen Dämmkern (7) aus Schaumstoff auf, der an eine Decklage (8) angeschäumt ist. Die Decklage (8) wird von einer formsteifen Schicht (9) aus Sand, Steinchen od.dgl. Granulatmaterial gebildet, deren Schichtdicke (D) ein Mehrfaches des Korndurchmessers des Granulatmaterials (10) beträgt. Beim Anschäumen des Dämmkerns (7) tritt der Schaumstoff in die Partikel-Zwischenräume des Granulatmaterials (10) ein und verbindet die Granulatpartikel fest miteinander.

## Beschreibung

Die Erfindung betrifft ein im Bauwesen insbesondere zur Verkleidung von Gebäudewänden zu verwendendes vorgefertigtes Dämmformteil in Gestalt einer Platte, einer Kassette, eines Paneels od.dgl., mit einem Dämmkern aus Schaumstoff, beispielsweise Polyurethan, und einer in Gebrauchslage an der dem Betrachter zugewandten Vorderseite des Dämmformteils angeordneten Decklage, an die der Dämmkern angeschäumt ist. Die Erfindung bezieht sich ferner auf ein Verfahren zur Herstellung eines solchen Formteils.

Derartige Formteile dienen also insbesondere zum Verkleiden einer Gebäudewand und dabei gleichzeitig zur Wärmeisolierung. Dabei werden die Formteile in horizontaler und vertikaler Richtung nebeneinander angeordnet, so daß sich eine geschlossene Fläche ergibt.

Bei bekannten Formteilen ist der die Wärmedämmung bewirkende Dämmkern an ein Metallblechteil als vorderseitige Decklage angeschäumt. Um den sich dem Betrachter darbietenden Metallflächen "natürliches" Aussehen zu geben, können diese Flächen entsprechend strukturiert und gefärbt werden. Dennoch unterscheiden sich solche Formteile immer noch deutlich von natürlichen Steinplatten od. dgl. und werden daher aus optischen Gründen häufig nicht eingesetzt.

Nachteilig bei diesen bekannten Formteilen ist ferner, daß ihre regelmäßig aus Aluminium bestehende Decklage je nach den herrschenden Temperaturen ihre Abmessungen verändert, so daß es bei der Gebäudewandverkleidung zu Ein- oder Ausbauchungen und zu einer mehr oder weniger großen Fugenbildung kommen kann, was ebenfalls das Aussehen beeinträchtigt und im Falle der Fugenbildung den Wärmeschutz herabsetzt.

Ein weiterer Nachteil liegt darin, daß die metallische Decklage vollständig dampfdicht ist, so daß eine aus solchen Formteilen hergestellte Gebäudewandverkleidung nicht durch die einzelnen Formteile hindurch atmen kann.

Schließlich sind Aluminiumbleche verhältnismäßig teuer, so daß die Formteilherstellung entsprechend kostenintensiv ist.

Der vorliegenden Erfindung liegt deshalb die Aufgabe zugrunde, ein Formteil der eingangs genannten Art zu schaffen, das bei einem "natürlichen " Aussehen auch bei großen Temperaturänderungen keine Abmessungsveränderungen erfährt und an seiner Vorderseite weniger dampfdicht ist und eine Dampfdiffusion zuläßt. Dabei soll dies in möglichst kostengünstiger Weise erreicht werden.

Diese Aufgabe wird erfindungsgemäß dadurch gelöst, daß die Decklage von einer formsteifen Schicht aus Sand, Steinchen od.dgl. Granulatmaterial gebildet wird, deren Schichtdicke ein Mehrfaches des Korndurchmessers des Granulatmaterials beträgt, wobei die Granulatpartikel durch beim Anschäumen des Dämmkerns in die Partikel-Zwischenräume des Granulatmaterials eingetretenen Schaumstoff als Bindemittel fest miteinander verbunden sind.

Das erfindungsgemäße Verfahren zur Herstellung eines solchen Formteils ist dadurch gekennzeichnet, daß die Decklage ergebender Sand, Steinchen od.dgl. Granulatmaterial schichtartig auf eine Unterlage bis zu einer einem Mehrfachen des Korndurchmessers des Granulatmaterials und dabei mindestens der gewünschten, der Decklage Formsteifheit gebenden Schichtdicke der Decklage entsprechenden Höhe aufgebracht wird, wonach man den Schaumstoff anschäumt und dabei in die Partikel-Zwischenräume des Granulatmaterials bis in eine etwa der gewünschten Schichtdicke der Decklage entsprechende Tiefe eindringen läßt.

Ein solches Formteil kann vom Betrachter nicht von einer insgesamt aus natürlichem Steinmaterial od.dgl. bestehenden Platte unterschieden werden.

Dabei ist für den Zusammenhalt der Partikel untereinander und des Granulatmaterials mit dem Dämmkern kein gesondertes Bindemittel in Gestalt eines Klebstoffs od.dgl. erforderlich, da diese Funktion von dem zur Wärmedämmung ohnehin benötigten Schaumstoff übernommen wird, der bei seinem Aufschäumen in die Partikel-Zwischenräume, also sozusagen in die Poren der Sand- oder Steinchenschicht eindringt und dort ein matrixartiges, die Partikel einbettendes Gebilde ergibt.

Dies ergibt eine äußerst stabile Decklage, die, wird sie nicht zu dünn gemacht, eine sehr große Schlagfestigkeit besitzt, die wegen des von dem Schaumstoff gebildeten Bindemittels größer als die Schlagfestigkeit beispielsweise von Sandstein ist. Wie Versuche gezeigt haben, führen selbst spitze Schlaginstrumente nicht zu Beschädigungen.

Normaler Sand, Quarzsand, Splitt und dergleichen Granulatmaterial ist ein verhältnismäßig billiges Produkt, so daß das Formteil entsprechend kostengünstig gefertigt werden kann.

Hinzu kommt die Dampfdiffusionsfähigkeit der sich ergebenden Deckschicht sowie deren Flammfestigkeit, die auch sehr strenge Brandschutzbestimmungen erfüllt.

Ferner ist ein solches Formteil witterungsfester als mancher Naturstein.

Ein weiterer Vorteil besteht darin, daß die erfindungsgemäße Decklage in den Fällen, wenn ein anderes Aussehen gewünscht wird, einen sehr wirksamen Haftgrund für einen Farbanstrich oder einen Verputz bildet.

Die Eindringtiefe des Schaumstoffs in die Granulatschicht und somit die Dicke der Decklage des Endprodukts kann ohne besondere Schwierigkeiten dadurch auf ein gewünschtes Maß eingestellt werden, daß man der den Schaumstoff ergebenden Substanz Zusatzmittel hinzufügt, das die Expansionsgeschwindigkeit und/oder Aushärtgeschwindigkeit beeinflußt. Je nach Art und Menge des Zusatzmittels gelangt der Schaumstoff mehr oder weniger weit in die Schicht hinein, bis er hart wird. Der vom Schaumstoff nicht erreichte Sand od.dgl. bleibt ungebunden und fällt daher weg.

Das Formteil gemäß vorliegender Erfindung läßt sich nicht nur für Gebäudewandverkleidungen sondern auch in anderen Fällen verwenden, in denen man mit Platten od.dgl. insbesondere eine wärmemäßige Isolierung erzielen will.

Die Erfindung wird nun anhand der Zeichnung erläutert.
Es zeigen:
- Fig. 1: ein erfindungsgemäßes Formteil in schematischer Schrägansicht in Teildarstellung,
- Fig. 2: das Formteil nach Fig. 1 im Querschnitt in stark vergrößerter Teildarstellung und
- Fig. 3: die Herstellung des erfindungsgemäßen Formteils in stark schematisierter Ansicht.

Das aus der Zeichnung hervorgehende Formteil 1 dient zum Verkleiden von Gebäudewänden und dabei vor allem zum Verkleiden einer Gebäudewand-Aussenseite. Es wird jedoch darauf hingewiesen, daß die Anwendung nicht auf dieses Gebiet beschränkt ist, da sich Formteile mit entsprechendem Aufbau auch für andere Zwecke eignen, wenn Platten od.dgl. mit wärmeisolierenden Eigenschaften benötigt werden.

Im Falle der Gebäudewandverkleidung wird eine den Wandabmessungen entsprechende Vielzahl solcher Formteile 1 in horizontaler und vertikaler Richtung aneinander gesetzt. Dabei kann es sich bei den Formteilen 1 um Platten, Kassetten, Paneele oder dergleichen handeln. Sie sind beim Ausführungsbeispiel so ausgebildet, daß sie mit dem jeweils seitlich benachbarten Formteil über eine nach Art von Nut und Feder ausgebildete Steckverbindung zusammenfügbar sind. Hierzu weisen sie an einem ihrer in Benutzungslage vertikalen Längsränder, in der Zeichnung am Längsrand 2, eine Stecknut 3 und am entgegengesetzten Längsrand 4 einen die Feder bildenden Steckvorsprung 5 auf, der in die Stecknut 3 des benachbarten Formteils paßt. Die obere Stirnkante 6 und die entsprechende untere Stirnkante des Formteils ist beim Ausführungsbeispiel eben. In vertikaler Richtung aufeinanderfolgende Formteile werden mit diesen Stirnkanten gegeneinander gestoßen, so daß sich insgesamt eine Gebäudewandverkleidung aus neben- und übereinander angeordneten Formteilen ergibt.

Die Art des Zusammenfügens und gegenseitigen Ausrichtens der Formteile und die Befestigung der Formteile an der Gebäudewand interessiert im vorliegenden Falle jedoch nicht weiter.

Das Formteil 1, beim Ausführungsbeispiel eine Platte mit rechteckigem Umriß, besteht im wesentlichen aus einem Dämmkern 7 mit wärmedämmenden Eigenschaften aus Hartschaumstoff wie Polyurethan sowie aus einer in Gebrauchslage an der dem Betrachter zugewandten Vorderseite des Formteils 1 angeordneten Decklage 8, an die der Dämmkern 7 angeschäumt ist. Somit ergibt sich ein Schichtaufbau aus der den Dämmkern 7 bildenden Schaumstoffschicht und der durch Anschäumen mit dieser verbundenen Decklage 8.

Die Decklage 8 wird von einer formsteifen Schicht 9 aus Sand, insbesondere Quarzsand, Steinchen od.dgl.Granulatmaterial 10 gebildet, deren Schichtdicke D ein Mehrfaches des Korndurchmessers des Granulatmaterials beträgt. Die einzelnen Partikel des Granulatmaterials 10 sind dadurch fest miteinander verbunden, daß der den Dämmkern 7 ergebende Schaumstoff beim Anschäumen an die Granulatschicht 9 in die Partikel-Zwischenräume des Granulatmaterials 10 eindringt und somit nach seinem Hartwerden diese Partikel fest miteinander verbindet, so daß der Schaumstoff hier die Funktion eines Bindemittels übernimmt.

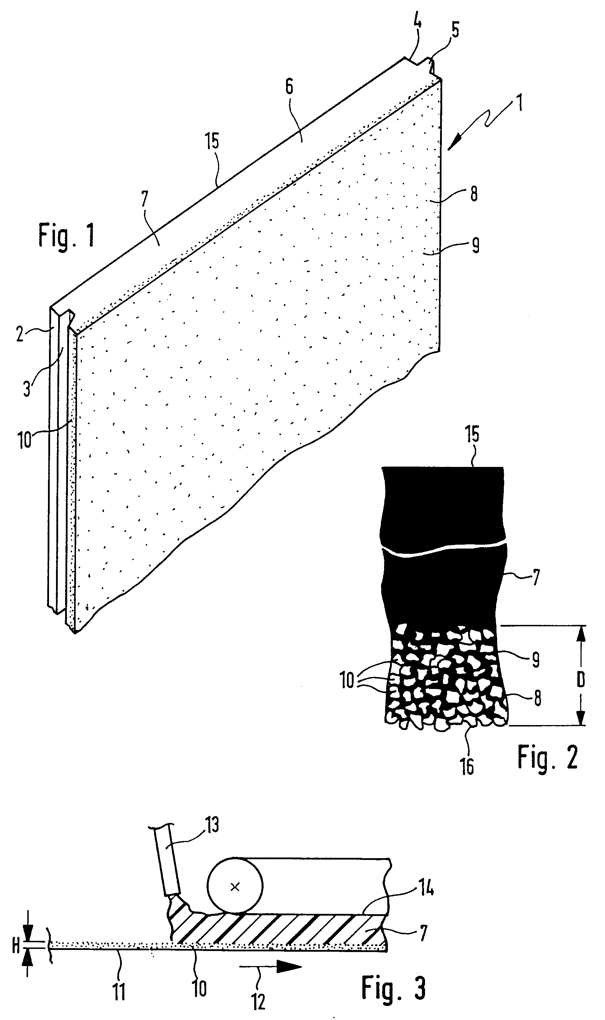

In Fig. 2 sind entgegen den Zeichenregeln der besseren Erkennbarkeit wegen die Granulatpartikel unausgefüllt und der Schaumstoff schwarz gezeichnet.

Bei der Herstellung kann gemäß Fig. 3 so vorgegangen werden, daß man das Granulatmaterial 10 schichtartig auf eine Unterlage 11 beispielsweise durch Aufstreuen oder Aufblasen aufbringt, und zwar bis zu einer einem Mehrfachen des Korndurchmessers des Granulatmaterials 10 entsprechenden Höhe H, die mindestens so groß wie die Schichtdicke D der Decklage 8 des fertigen Formteils 1 ist. Arbeitet die Fertigungsanlage im endlosen Durchlaufverfahren, kann es sich bei der Unterlage 11 um eine förderbandartige Unterlage handeln, die sich in Richtung gemäß Pfeil 12 bewegt. Die Schichtdicke D der Decklage 8 bemißt sich insbesondere danach, daß man eine formsteife und den auftretenden mechanischen Belastungen sicher standhaltende Decklage 8 erhält.

Befindet sich das Granulatmaterial 10 auf der Unterlage 11, wird der Schaumstoff aus einem geeigneten Abgabewerkzeug 13 zum Granulatmaterial 10 hin abgegeben und gegen dieses geschäumt. Hierbei dringt, wie bereits erwähnt, die Schaumstoffsubstanz auch in die Partikel-Zwischenräume des Granulatmaterials 10 ein, was nach dem Aushärten den sehr festen Verbund ergibt. Dabei läßt man die Schaumstoffsubstanz bis in eine etwa der gewünschten Schichtdicke D der Decklage 8 entsprechende Tiefe in das Granulatmaterial 10 eindringen.

Die vom Schaumstoff nicht erreichten Granulatpartikel fallen bei der späteren Wegnahme des jeweiligen Formteils von der Unterlage 11 von selbst weg, da sie nicht gebunden sind. Zweckmäßigerweise wird man die sich ergebende Oberfläche noch einem Bürstvorgang unterziehen, bei dem die nur lose sitzenden Partikel vollends weggebürstet werden.

Arbeitet man wie beim Ausführungsbeispiel im Durchlaufverfahren, wird der Schaumstoff praktisch ununterbrochen auf die sich am Abgabewerkzeug 13 vorbeibewegende Schicht aus dem Granulatmaterial 10 aufgebracht. Die aufschäumende Substanz gelangt dann zusammen mit der Unterlage 11 und dem Granulatmaterial 10 zu einer beim Ausführungsbeispiel ebenfalls von einer förderbandartigen Einrichtung gebildeten Formungsfläche 14, die der Unterlage 11 etwa im der Dicke des fertigen Formteils 1 entsprechenden Abstand gegenüberliegt und sich mit gleicher Geschwindigkeit wie die Unterlage 11 ebenfalls in Richtung gemäß Pfeil 12 bewegt. In dem einerseits von dem Granulatmaterial 10 und andererseits von der Formungsfläche 14 begrenzten Spalt schäumt der Schaumstoff gegen die Formungsfläche 14, so daß die Formungsfläche 14 die Formteil-Rückseite 15 formt. Am entgegengesetzten, nicht dargestellten Ende der Anlage werden die Formteile 1 von dem sich ergebenden Strangmaterial abgelängt. Dies ergibt die Stirnkanten 6.

Anstelle im Durchlaufverfahren lassen sich die Formteile selbstverständlich auch in einer Einzelform herstellen, in die man zunächst das Granulatmaterial und dann den Schaumstoff einbringt. Welches Verfahren man anwendet, richtet sich beispielsweise nach der Gestalt der Formteile.

Unabhängig davon, ob man im Durchlaufverfahren oder mit einzelnen Formen arbeitet, kann man die formgebenden Flächen, gegen die der Schaumstoff schäumt, so daß sie diesem seine Gestalt geben, mit einem geeigneten Überzugsmittel versehen werden, das am Schaum haften bleibt und nach der Entnahme aus der Anlage bzw. der einzelnen Form einen Schaumstoffüberzug bildet.

Es versteht sich, daß man insbesondere die Rückseite des Formteils prinzipiell auch in anderer Weise abdecken kann, beispielsweise mittels einer dünnen Metallfolie, die ebenfalls durch Anschäumen fest mit dem Schaumstoff verbunden wird.

Die Dicke D der Granulatmaterialschicht 9, d.h. der Decklage 8, beträgt normalerweise mehrere Millimeter und wird im einzelnen so bemessen, daß man eine sehr feste und sozusagen steinharte Decklage 8 erhält. Zweckmäßigerweise liegt die Dicke D der Größenordnung nach im Bereich zwischen etwa 4mm und 10 mm.

Beim Eindringen in das Granulatmaterial 10 wird die Schaumstoffsubstanz mit zunehmender Eindringtiefe zäher und fester, bis die Eindringbewegung zum Erliegen kommt. Auf diese Weise kann man durch Verändern der Aushärteigenschaften der Schaumstoffsubstanz durch Zugabe entsprechender Zusatzmittel die Eindringtiefe steuern.

Dies führt außerdem dazu, daß die Schaumstoffkonzentration in der Granulatmaterialschicht 9 nach außen hin in Richtung vom Dämmkern 7 weg abnimmt.

Auf jeden Fall sollte die dem Dämmkern 7 entgegengesetzte Oberseite 16 der Granulatmaterialschicht 9, die dem Betrachter zugewandt ist, frei von Schaumstoff sein. Man würde sonst nicht das steinartige Aussehen sondern eine glatte Schaumstoffläche erhalten. Daß man die Oberseite 16 auch bürsten kann, um die losen Partikel zu entfernen und möglicherweise auch das Aussehen zu verbessern, wurde bereits erwähnt.

## Patentansprüche

1. Im Bauwesen insbesondere zur Verkleidung von Gebäudewänden zu verwendendes vorgefertigtes Dämmformteil in Gestalt einer Platte, einer Kassette, eines Paneels od.dgl., mit einem Dämmkern aus Schaumstoff, beispielsweise Polyurethan, und einer in Gebrauchslage an der dem Betrachter zugewandten Vorderseite des Formteils angeordneten Decklage, an die der Dämmkern angeschäumt ist, dadurch gekennzeichnet, daß die Decklage (8) von einer formsteifen Schicht (9) aus Sand, Steinchen od.dgl. Granulatmaterial gebildet wird, deren Schichtdicke (D) ein Mehrfaches des Korndurchmessers des Granulatmaterials (10) beträgt, wobei die Granulatpartikel durch beim Anschäumen des Dämmkerns (7) in die Partikel-Zwischenräume des Granulatmaterials (10) eingetretenen Schaumstoff als Bindemittel fest miteinander verbunden sind.

2. Dämmformteil nach Anspruch 1, dadurch gekennzeichnet, daß die Schaumstoffkonzentration in der Granulatmaterialschicht (9) nach außen hin in Richtung vom Dämmkern (7) weg abnimmt.

3. Dämmformteil nach Anspruch 1 oder 2, dadurch gekennzeichnet, daß die dem Dämmkern (7) entgegengesetzte Oberseite (16) der Granulatmaterialschicht (9) frei vom Schaumstoff ist.

4. Dämmformteil nach einem der Ansprüche 1 bis 3, dadurch gekennzeichnet, daß die dem Dämmkern (7) entgegengesetzte Oberseite (16) der Granulatmaterialschicht (9) gebürstet ist.

5. Dämmformteil nach einem der Ansprüche 1 bis 4, dadurch gekennzeichnet, daß die Dicke (D) der Granulatmaterialschicht (9) mehrere Millimeter beträgt.

6. Dämmformteil nach Anspruch 5, dadurch gekennzeichnet, daß die Dicke (D) der Granulatmaterialschicht (9) der Größenordnung nach im Bereich zwischen etwa 4 mm und 10 mm liegt.

7. Verfahren zur Herstellung eines im Bauwesen insbesondere zur Verkleidung von Gebäudewänden zu verwendenden vorgefertigten Dämmformteils in Gestalt einer Platte, einer Kassette, eines Paneels od.dgl., das einen Dämmkern aus Schaumstoff, beispielsweise Polyurethan, und eine in Gebrauchslage an der dem Betrachter zugewandten Vorderseite des Dämmformteils angeordnete Decklage aufweist, wobei die Decklage auf eine Unterlage aufgebracht und der den Dämmkern ergebende Schaumstoff an die Decklage angeschäumt wird, dadurch gekennzeichnet, daß die Decklage (8) ergebender Sand, Steinchen oder dergleichen Granulatmaterial schichtartig auf die Unterlage (11) bis zu einer einem Mehrfachen des Korndurchmessers des Granulatmaterials und dabei mindestens der gewünschten, der Decklage (8) Formsteifheit gebenden Schichtdicke (D) der Decklage entsprechenden Höhe (H) aufgebracht wird, wonach man den Schaumstoff anschäumt und dabei in die Partikel-Zwischenräume des Granulatmaterials (10) bis in eine etwa der gewünschten Schichtdicke (D) der Decklage (8) entsprechende Tiefe eindringen läßt.

8. Verfahren nach Anspruch 7, dadurch gekennzeichnet, daß die vom Schaumstoff nicht erreichten Granulatpartikel nach der Wegnahme des Dämmformteils (1) von der Unterlage (11) weggebürstet werden.
